# EUROPEAN PATENT SPECIFICATION

(11) **EP 2 710 201 B1**
(45) Date of publication and mention of the grant of the patent: **15.04.2020**
(21) Application number: 12721273.6
(22) Date of filing: 14.05.2012
(51) Int. Cl.: C09D 7/41, C09D 5/33, C09D 7/61, E04D 7/00

(54) **SOLAR INFRA RED REFLECTIVE PAINTS**
SONNEN-INFRAROT REFLEKTIERENDE FARBEN
PEINTURE RÉFLÉCHISSANTE DANS L'INFRAROUGE SOLAIRE

(30) Priority: 16.05.2011 EP 11166234
(43) Date of publication of application: 26.03.2014
(73) Proprietor: Akzo Nobel Coatings International B.V., 6824 BM Arnhem (NL)
(72) Inventor: MURRAY, Kenneth, Andrew, Maidenhead, Berkshire SL6 6DB (GB); OSBORN, Barry, Norman, Suffolk IP17 3AZ (GB)
(74) Representative: Akzo Nobel IP Department
(86) International application number: PCT/EP2012/058849
(87) International publication number: WO 2012/156337

(56) References cited:
- WO-A2-2005/095528
- CN-A- 101 684 361
- US-B1- 6 366 397
- DATABASE CAPLUS, [Online] 7 April 2005 (2005-04-07), SUZUKI HIROSHI: "Heat reflecting roofing material having coating layer as heat shield", XP002594532, retrieved from CAPLUS Database accession no. 2005-302272 & JP 2005 090042 A (NIPPON TOKUSHU TORYO CO LTD) 7 April 2005 (2005-04-07)
- GUPTA ET AL: "Elementary study of IR reflectance properties of organic and inorganic pigment formulations", PAINTINDIA, INDIA, vol. 54, no. 4, 1 January 2004 (2004-01-01), pages 45-60, XP009150081, ISSN: 0556-4409

## Description

This invention relates to solar Infra Red reflective paints and in particular it provides infra-red reflective exterior architectural paint compositions which, when dry, have lightness value, L*, from 38 to 88 and which are free of any black pigment. It also provides a method of reducing the temperature rise of a roof or wall on exposure to solar radiation.

When the sun beats down on the surface of buildings, such as walls and roofs, the temperature of the exterior and eventually the interior of the building, unless it is perfectly insulated, will rise. This is largely a consequence of the infra-red (IR) portion of the solar radiation (of wavelength from 700-2500nm) being absorbed by the exterior surfaces and thence transmitted to the interior surface of the wall. In buildings equipped with cooling equipment, such as air conditioners, the temperature can be reduced to comfortable levels, albeit at a substantial cost in energy consumption and thus carbon emissions. Where air conditioners are not fitted, occupants suffer in uncomfortable ambient conditions.

One known way to limit the temperature rise is to paint the exterior of the building a pastel or light colour, in particular white. Such colours are effective at limiting the temperature rise because they reflect not only the visible part of the solar spectrum but also the infra red (IR). White and pastel colours are effective in this way largely because they are free of carbon black, a black pigment that absorbs across the visible and IR region of the solar spectrum. Additionally, titanium dioxide is a good reflector of IR radiation.

The very strong absorption by carbon black of IR radiation also means that the deeper pastel colours and especially dark colours themselves are rarely used to paint the exteriors of buildings in hot countries, thus limiting the palette available to architects and decorators.

All colours, can be defined using the well known L*, a*, b* system. In the system, any colour can be represented by:
i. its lightness, L* (where 0 is black and 100 is white)
ii. its a* value which places the colour on an opponent scale from green (negative numbers) to zero (neutral) to red (positive numbers)
iii. its b* value which places the colour on an opponent scale from blue (negative numbers) to zero (neutral) to yellow (positive numbers) Lightness, L*, is a quantitative measure of the perceived lightness of the colour, ranging from 0 to 100, with 0 representing black and 100 white.

These terms are defined scientifically by the Commission Internationale de l'Eclairage (CIE) [see 'International Lighting Vocabulary', 4th Edition, published IEC/CIE 017.4-1987. ISBN 978 3 900734 07 7].

Additionally it is useful to define the hue, h. Hue is a measure of how close the colour is to red, yellow, green and blue and is derived from the a* and b* values (h = arctan(b*/a*). It is depicted by hue angle ranging from 0 to 360° where the angle defines the position of the hue in colour space, where red, yellow, green and blue are at angles of 0, 90, 180 and 270° respectively. Angles between these 'cardinal points' indicate intermediate colours eg a hue angle of 45° is a reddish yellow (orange) colour.

We have found that, surprisingly, even pastel coloured paints having lightness values, L* of from 38-88, suffer significant temperature rises as a result of exposure to solar radiation. Equally surprisingly, we have found that only 0.05wt% of carbon black pigment, calculated on the weight of the dried paint composition, is sufficient to cause a rise in temperature of a roof or exterior wall.

International application, WO2005/095528, describes heat reflective wall paint compositions comprising heat reflective metal oxide pigments. Such metal oxide pigments include black pigments such as V-797 and V-799.

US 6,366,397 discloses a two part heat reflective system comprising a first IR reflective layer and a second IR transparent layer. The IR transparent layer can contain IR absorptive black pigment such as carbon black and/or IR transparent pigment such as Perylene Black S - 0084.

JP 2005-90042A is directed to a heat reflecting roofing material wherein the pigments are selected from a range of pigments including titanium dioxide, red iron oxide and phthalocyanine blue.

Attempts have been made by pigment manufacturers to replace carbon black with black pigments which are reflective in the IR region. Clearly such reflective pigments are also substantially non-absorbing in the IR region. Sheppard Color of Cincinnati, Ohio have a range of reflective pigments, known as Arctic® pigments, including a black reflective pigment 10C909. Degussa Metals Catalysts Cerdec Corp., Washington also produces a range of IR- reflective pigments known as Eclipse® including black pigments Eclipse 10201, 10202, 10203 and 10204. Other known IR reflective pigments include chrome iron oxide (pigment brown 29), sold as Xfast EH 0408 (BASF) or Sicopal K 0095 and chrome iron oxide (pigment brown 35), sold as Heucodur IR Black 940 (Heubach). US patent applications 2010/091416 and US 2010/091418 disclose point of sale tinting schemes incorporating such pigments in the colorants.

However, the known black reflective pigments require complicated processes to produce and are costly to manufacture. This tends to make them too expensive to be used routinely in ready-mixed architectural paints

In addition to the non-absorbing and reflective pigments are black pigments which are transparent to IR wavelengths. In other words, they neither absorb nor reflect the IR region of the spectrum. An example of such a pigment is Paliogen Black L0086.

Thus, eliminating carbon black from paints presents an opportunity to improve the energy efficiency of buildings. We have now found a way to formulate non-white IR reflective paints which are free of all black pigments, in particular IR-absorptive pigments such as carbon black and IR-reflective pigments such as Sicopal K 0095 and IR-transparent pigments such as Paliogen Black L0086.

In a first aspect of the invention there is provided an IR-reflective architectural paint composition comprising
i. red iron oxide pigment
ii. phthalocyanine blue pigment
iii. titanium dioxide and optionally yellow iron oxide
wherein the composition is free of IR-absorptive black pigments, IR-transparent black pigments and IR-reflective black pigments, has a lightness value, L*, when dry, of from 38 to 88 and the weight ratio of i:ii is from 3:1 to 15:1,

Preferably, the paint compositions of the invention have a colour depicted by hue angles, h*, between 60 and 300°. The reason for this is that these hues (orange-red through yellow, yellow-green, green, green-blue and blue) usually contain carbon black pigment to provide the black component in the colour. Consequently dried paint compositions having these hues exhibit the highest temperature rises on exposure to solar radiation and thus will benefit most from the present invention, The hues in the range 300 to 60° (blue-red to orange-red) whilst they may well contain small amounts of carbon black, may also contain some red iron oxide and phthalocyanine blue, in order to achieve the desired hue. Thus the benefit is less for this range of hues. Phthalocyanine blue is transparent to IR radiation and red iron oxide is partially transparent. Neither, therefore, absorb IR when exposed to sunlight. Consequently, most of the incident IR radiation will pass through a paint film consisting of such pigments, strike the underlying surface, be it a wall or a roof, and heat it directly. Titanium dioxide is reflective of IR radiation and its presence in paint compositions of the invention prevents the radiation reaching the substrate. Advantageously, red iron oxide is also slightly reflective of radiation in the IR. Similarly, yellow iron oxide is also reflective of IR radiation. Thus, there is no need for a separate first IR reflective layer in the present invention.

Preferably, the paint composition is an exterior architectural paint for coating the exterior surfaces of buildings such as domestic housing and offices.

Red iron oxide is C.I Pigment Red 101 and yellow iron oxide is C.I.Pigment Yellow 42. Phthalocyanine blue is available in various forms including C.I. Pigment Blue 15, 15:1, 15:2, 15:3, 15:4, 15:5, 15:6 and 16, any one of which is suitable for use in the invention.

Titanium dioxide exists in two common forms known as rutile and anatase. The rutile form is preferred as it has the highest refractive index and is thus a better reflector of light, including in the IR region. Suitable examples include Tioxide RTC90 and RTC92, Tiona 595 (available from Cristal)

The particle size of the titanium dioxide is also relevant to light reflection. Below about 100nm, the titanium dioxide particles are not efficient reflectors of the visible and IR spectrum. It is preferred therefore that the mean particles size of the titanium dioxide is at least 100nm, more preferably from 100 to 350nm and most preferably from 100 to 300nm.

Preferably, compositions of the invention comprise at least 2wt% of TiO₂, more preferably at least 4wt%, even more preferably at least 6wt% and most preferably at least 8wt%. As TiO₂ is expensive and has a large carbon footprint, a minimum amount of TiO₂ is desirable in the composition and thus the practical upper limit is between 8 and 16wt%, more preferably less than 12wt% and most preferably less than 10wt%.

The composition, when dry, should comprise at least 4wt% of TiO₂, more preferably at least 8wt%, even more preferably at least 12wt% and most preferably at least 16wt%. The upper limit is between 16 and 32wt%, more preferably less than 28wt%, even more preferably less than 24wt% and most preferably less than 20wt%.

The red and yellow iron oxide pigment should be ground to a particle size in the same size range as for titanium dioxide

The phthalocyanine blue pigment should be ground to transparency.

Preferably the composition when dry has a lightness value, L* of from 45 to 88, more preferably from 55 to 88, even more preferably from 62 to 88, yet more preferably from 65 to 88 and most preferably from 75 to 88.

Preferably, the composition when dry comprises red iron oxide, phthalocyanine blue, titanium dioxide and optionally yellow iron oxide. More preferably, the composition when dry comprises from 0.100 to 5.000wt% of red iron oxide and from 0.015 to 0.900wt% of phthalocyanine blue. Even more preferably, the composition when dry comprises at least 4wt% TiO₂.

Preferably, the ratio of red iron oxide to phthalocyanine blue is from 4:1 to 15:1, more preferably from 5: 1 to 15:1, even more preferably from 5:1 to 11:1, still more preferably from 5: 1 to 8:1 and most preferably from 4:1 to 8:1.

Preferably, the paint composition is free of metallic pigments such as aluminium as these produce a metallic sheen to the colour.

Preferably, the paint develops its final properties at normal temperature such as 15 to 25°C and does not require elevated temperatures.

Preferably, the paint composition is opaque at a dry film thickness of 50µm. By opaque is meant that the contrast ratio is at least 95 when a coating of the invention is applied over a black and white opacity card and allowed to dry. The contrast ratio is the light reflectance measured over the black portion of the chart compared to the white portion, expressed as a percentage.

In a further aspect of the invention there is provided a method of reducing the temperature rise of a roof or exterior wall of a building, resulting from absorption of solar IR radiation, comprising coating the exterior surface of the wall or roof with an IR reflective paint composition according to a paint composition of the invention.

In a yet further aspect of the invention there is provided an exterior wall or roof of a building coated with a paint composition of the invention.

It is envisaged that the paint compositions of the invention can be made in both specialised manufacturing facilities in large batches, typically in volumes of at least hundreds of litres; and also in retail stores, where batch quantities no more than 50 litres are made, usually on request from a customer. In the latter case, the paints are made using compact tinting machines, comprising colorants and base paints. Colorants are concentrated dispersions of pigments. By having a number of the colorants, typically 10 to 20, each formulated using pigments of different hues, a large number of coloured paints can be provided by simply mixing at least one of the colorant(s) with the appropriate base paint in accordance with a predetermined recipe. Even more colours can be produced by providing a plurality of base paints, themselves varying in hue, including clear (unpigmented) base paint. A base paint differs from a ready for use (RFU) paint in that the colour has not been finally adjusted. The colorants are usually packaged in containers of up to 51 and the base paints up to 25 litres.

In a yet further aspect of the invention there is provided a point of sale tinting system comprising at least one base paint and colorants wherein the base paint and the colorants are free of Infra Red-absorptive black pigments, Infra Red-transparent black pigments and free of Infra Red reflective black pigments.

Preferably, the base paint is light coloured and/or unpigmented.

By IR reflective is meant that the paint compositions of the invention, when dry, reflect more of the sun's radiation than compositions which rely on carbon black for their black colour component. This can be determined by measuring the surface temperature of a coated substrate as described below. The more reflective the coating the lower the temperature of the panel surface. For the purposes of the invention we regard a coating as IR reflective when the temperature of a coating of the invention is at least 1°C lower than a corresponding comparative coating when tested over a white first coat as described below.

The invention will now be illustrated by the following examples.

In all examples the red iron oxide used was PR101 and the phthalocyanine blue pigment was PB15:3

### Example 1

A grey paint was prepared according to the recipe below

| | g | | |
|---|---|---|---|
| 12.6% TiO₂ base paint: | 25.22 | | |
| Pigment-free base paint: | 73.65 | | |
| Red iron oxide colorant: | 3.34 | of which red iron oxide pigment: | 2.17g |
| Phthalocyanine blue colorant: | 0.72 | of which phthalocyanine blue pigment: | 0.32g |

The TiO₂ base paint is aqueous and has a total solids of 53.5% (by weight) consisting of 29.0% extenders, 10.1% binder polymer, 12.6% TiO₂ (Tioxide TR92 - available from Huntsman Corporation) with the remaining solids being additives. The pigment-free base paint is aqueous and has a total solids of 51.9% (by weight) consisting of 30.8%extenders, 19% binder polymer with the remaining solids being additives.

The colorants are pigment concentrates in liquid form and are added to the mixture of base paints in a suitably sized vessel mixed in by stirring.

In a point of sale tinting scheme, where the colorant is added to a base paint in a can, the amount of TiO₂ in the base paint would be 3.21% (by weight) - being the average of the 12.6% TiO₂ base paint and the pigment-free base paint. After the addition of the colorant to the can of base paint, the can is vigorously shaken using a Red Devil shaker.

Test panels were prepared using thin precoated steel panels. These were coated with a wire wound bar with either a black or a white undercoat and allowed to dry followed by two coats of the example matt paint (each of ca 50µm dry film weight) were applied and allowed to dry to give the following CIELAB values calculated from the spectral reflectance curve measured using a Datacolor Spectraflash SF 600 spectrophotometer in accordance with the manufacturer's instructions.

The measured L*, a*, B* were L* 40.8, a* -0.7, b* -1.5; the colour over the black panels and the white panels was almost identical (dE less than 0.3).

### Comparative Example A

A comparative example A paint made using carbon black used the following formulation:

| | g | | |
|---|---|---|---|
| 12.6% TiO₂ base paint: | 25.22 | | |
| Pigment free base paint: | 73.65 | | |
| Black colorant: | 0.25 | of which carbon black pigment: | 0.11g |
| Yellow iron oxide colorant: | 0.19 | of which yellow iron oxide pigment: | 0.10g |
| Red iron oxide colorant: | 0.64 | of which red iron oxide pigment: | 0.42g |
| Phthalocyanine blue colorant: | 0.05 | of which phthalo blue pigment: | 0.02g |

Test panels were prepared using thin precoated steel panels as before. These were coated with either a black or a white undercoat and then two coats of the example paint were applied to give the CIELab colours L* 40.8, a* -0.7, b* -2.0; the colour over black and white was almost identical (dE less than 0.3). This is within dE 1 to the example 1 formulation and is a good visual colour match.

All four panels were placed on a hardboard support and exposed to direct outdoor sunshine as before. Standard black (using carbon black pigment) and white (using titanium dioxide pigment) paints were also included in the test. The surface temperature of the panels was recorded. The average of six measurements was taken:

| | |
|---|---|
| Example 1 over black: | 39.0 °C |
| Example 1 over white: | 37.7 °C |
| Comparative example A over black: | 43.8 °C |
| Comparative example A over white: | 44.4 °C |
| Standard black paint: | 43.5 °C |
| Standard white paint: | 25.9 °C |

The standard black paint had the following CIELAB values L8=26.4, b*=-.02 and b*=-0.49

A further comparative example A1 was prepared using IR reflective black Xfast EH0408 (BASF). The recipe used was:

| | g | | |
|---|---|---|---|
| 9.5% *TiO₂ base paint: | 25.22 | | |
| Pigment-free base paint: | 73.65 | | |
| Xfast EH0408: | 6.02 | | |
| Yellow iron oxide colorant: | 1.59 | of which yellow iron oxide pigment: | 0.86g |
| Phthalocyanine blue colorant: | 0.12 | of which phthalocyanine blue pigment: | 0.05g |

| | | | |
|---|---|---|---|
| *Tioxide RTC90 (available from Huntsman Corporation | | | |

Test panels were prepared using thin precoated steel panels as before. These were coated with either a black or a white undercoat and then two coats of the example paint were applied to give the CIELab colours L* 40.9, a* -1.1, b* -2.2; the colour over black and white was almost identical (dE less than 0.3). This is within dE 1 to the example 1 formulation and comparative example 2 and is a good visual colour match.

In the same test as example 1 and comparative example A, this paint gave the following temperatures:
Comparative example A1 over black: 39.2 °C
Comparative example A1 over white: 39.2 °C

These temperatures are close to the example 1 over black results but still higher than the example 1 over white results, indicating poorer solar reflectance in the latter case.

### Example 2

A pale grey paint was prepared according to the recipe below.

| | g | | |
|---|---|---|---|
| 9.1% TiO₂ base paint: | 99.8995 | | |
| Red iron oxide colorant: | 0.0825 | of which red iron oxide pigment: | 0.0536g |
| Phthalocyanine blue colorant: | 0.0180 | of which phthalocyanine blue pigment: | 0.0080g |

The TiO₂ base paint is aqueous and has a total solids of 50.9% (by weight) consisting of 30.4% extenders, 9.3% binder polymer, 9.5% TiO₂ with the remaining solids being additives.

Test panels were prepared using thin precoated steel panels as before. These were coated with either a black or a white undercoat, allowed to dry, after which time two coats of the example paint were applied and dried to give the CIELab colours L* 86.1, a* -1.8, b* -1.3; the colour over black and white was almost identical (dE less than 0.2).

### Comparative Example B

A comparative example B paint made using carbon black used the following formulation:

| | g | | |
|---|---|---|---|
| 9.1% TiO₂ base paint: | 99.853 | | |
| Black colorant: | 0.147 | of which carbon black pigment: | 0.029g |

Test panels were prepared using thin precoated steel panels as before. These were coated with either a black or a white undercoat after which time two coats of the comparative example paint were applied and allowed to dry to give the CIELab L*, a*, B* values of L* 86.0, a* -1.0, b* -1.8; the colour over black and white was almost identical (dE less than 0.2). This is within dE 1 to the example 2 formulation and is a good visual colour match.

All four panels were placed on a hardboard support and exposed to direct outdoor sunshine as before. Standard black and white paints were also included in the test. The surface temperature of the panels was recorded. The average of four measurements was taken:

| | |
|---|---|
| Example 2 over black: | 28.2 °C |
| Example 2 over white: | 27.5 °C |
| Comparative example B over black: | 31.4 °C |
| Comparative example B over white: | 30.5 °C |
| Standard black paint: | 46.7 °C |
| Standard white paint: | 25.8 °C |

Panels coated with comparative example B are significantly higher in temperature than those coated with example 2, indicating a poorer solar reflectance of comparative example B.

### Example 3

A pale grey paint was prepared according to the recipe below

| | g | | |
|---|---|---|---|
| 6.76% TiO₂ base paint | 992.800 | | |
| Red iron oxide colorant | 21.571 | of which red iron oxide pigment: | 12.57g |
| Phthalocyanine blue colorant | 32.323 | of which phthalocyanine blue pigment: | 1.842g |
| Phthalocyanine green pigment | 12.332 | of which phtalocyanine green pigment: | 0.863g |

The base TiO₂ base paint is aqueous and contains 6.76% (by weight) of titanium dioxide.

A comparative paint, example C, was made according to the following recipe using carbon black.

| | g | | |
|---|---|---|---|
| 6.76% TiO₂ base paint | 992.800 | | |
| Black colorant | 59.880 | of which carbon black pigment: | 4.430g |
| Yellow iron oxide pigment | 8.920 | of which yellow iron oxide pigment: | 4.950g |
| Red iron oxide | 3.751 | of which red iron oxide pigment: | 2.190g |

Test panels were prepared using card panels. These were coated with either a black or a white undercoat and allowed to dry followed by two coats of paint C and allowed to dry to give the CIELab colours L* 48.71, a* 0.07, b* -0.61 for the example 3 paint and L* 48.27, a* 0.12, B* -0.51 for comparative example C. The two paints gave a good visual colour match (dE between panels of 0.45).

The two panels were placed on a hardboard support and exposed to direct outdoor sunshine as before. The surface temperature of the panels was recorded. The average of six measurements was taken:

| | |
|---|---|
| Example 3: | 42.5 °C |
| Comparative example C: | 49.8 °C |
| Standard black paint: | 53.0 °C |
| Standard white paint: | 29.3 °C |

Panels coated with comparative example C are significantly higher in temperature than those coated with example 3, indicating a lower solar reflectance of comparative example C.

The UV/visible/IR reflectance spectra of the panels were recorded using a Perkin Elmer Lambda 950 Spectrophotometer and the total solar reflectance (TSR) calculated according to ASTM E903:

| | TSR |
|---|---|
| Example 3: | 39.3% |
| Comparative example C: | 14.0% |

Comparative Example C has a significantly lower TSR value indicating that a lower proportion of the incident solar radiation is reflected by comparative paint C than the paint of the invention, example 3.

## Claims

1. An Infra Red-reflective architectural paint composition comprising
i. red iron oxide pigment
ii. phthalocyanine blue pigment
iii. titanium dioxide and optionally yellow iron oxide
wherein the composition is free of Infra Red-absorptive black pigments, Infra Red-transparent black pigments and Infra Red -reflective black pigments, has a lightness value, L*, when dry, of from 38 to 88 and the weight ratio of i:ii is from 3:1 to 15:1,

2. A paint composition according to claim 1 wherein the lightness value, L*, of the composition when dry is from 65 to 88.

3. A paint composition according to claim 1 or claim 2 wherein the titanium dioxide is the rutile form.

4. A paint composition according to any one of the preceding claims wherein the titanium dioxide pigment comprises at least 4wt% based on total dry paint.

5. A paint composition according to any one of the preceding claims wherein the titanium dioxide has a mean particle size of at least 100nm.

6. A paint composition according to any one of the preceding claims wherein the phthalocyanine blue pigment is selected from the group consisting of CI Pigment Blue 15, 15:1, 15:2, 15:3, 15:4, 15:5, 15:6 and 16.

7. A paint composition according to any one of the preceding claims wherein the red iron oxide comprises from 0.100 to 5.000wt% and the phthalocyanine blue comprises 0.015 to 0.900wt% of the composition when dry.

8. A paint composition according to any one of the preceding claims wherein a 50µm dry coat of the composition is opaque, the contrast ratio being at least 95, expressed as a percentage of light reflectance measured over a black portion of a chart compared to a white portion, when a coating is applied over a black and white opacity card and allowed to dry.

9. A paint composition according to any one of the preceding claims wherein the composition, when dry, has a colour defined by a hue angle between 60 and 300°.

10. A roof or exterior wall of a building coated with the paint composition according to any one of the preceding claims.

11. A roof or exterior wall of a building according to claim 10 coated with a sufficient amount of the Infra Red-reflective paint composition to provide a dry paint coat of at least 50µm.

12. A method of reducing the temperature rise of a roof or exterior wall of a building exposed to solar Infra Red radiation comprising coating the exterior surface of the wall or roof with an Infra Red-reflective paint composition according to any one of claims 1 to 9.

13. A method according to claim 12 wherein the roof or exterior wall is coated with a sufficient amount of the Infra Red-reflective paint composition according to any one of claims 1 to 7 to provide a dry paint coat of at least 50µm.

## Patentansprüche

1. Infrarotreflektierende architektonische Farbmittelzusammensetzung, umfassend
i. Eisenoxidrot-Pigment,
ii. Phthalocyaninblau-Pigment,
iii. Titandioxid und gegebenenfalls Eisenoxidgelb,
wobei die Zusammensetzung frei von infrarotabsorbierenden Schwarzpigmenten, infrarotdurchlässigen Schwarzpigmenten und infrarotreflektierenden Schwarzpigmenten ist und einen Helligkeitswert L* in trockenem Zustand von 38 bis 88 aufweist und das Gewichtsverhältnis von i:ii 3:1 bis 15:1 beträgt.

2. Farbmittelzusammensetzung nach Anspruch 1, wobei der Helligkeitswert L* der Zusammensetzung in trockenem Zustand 65 bis 88 beträgt.

3. Farbmittelzusammensetzung nach Anspruch 1 oder Anspruch 2, wobei das Titandioxid in der Rutil-Form vorliegt.

4. Farbmittelzusammensetzung nach einem der vorhergehenden Ansprüche, wobei das Titandioxid-Pigment mindestens 4 Gew.-%, bezogen auf das gesamte trockene Farbmittel, ausmacht.

5. Farbmittelzusammensetzung nach einem der vorhergehenden Ansprüche, wobei das Titandioxid eine mittlere Teilchengröße von mindestens 100 nm aufweist.

6. Farbmittelzusammensetzung nach einem der vorhergehenden Ansprüche, wobei das Phthalocyaninblau-Pigment aus der Gruppe bestehend aus Cl Pigment Blue 15, 15:1, 15:2, 15:3, 15:4, 15:5, 15:6 und 16 ausgewählt ist.

7. Farbmittelzusammensetzung nach einem der vorhergehenden Ansprüche, wobei das Eisenoxidrot 0,100 bis 5,000 Gew.-% der Zusammensetzung in trockenem Zustand ausmacht und das Phthalocyaninblau 0,015 bis 0,900 Gew.-% der Zusammensetzung in trockenem Zustand ausmacht.

8. Farbmittelzusammensetzung nach einem der vorhergehenden Ansprüche, wobei eine 50 µm dicke trockene Schicht der Zusammensetzung opak ist, wobei das als Prozentanteil der über einem schwarzen Teil einer Karte gemessenen Lichtreflexion im Vergleich zu einem weißen Teil beim Aufbringen einer Beschichtung auf eine schwarz-weiße Opazitätskarte und Trocknenlassen ausgedrückte Kontrastverhältnis mindestens 95 beträgt.

9. Farbmittelzusammensetzung nach einem der vorhergehenden Ansprüche, wobei die Zusammensetzung in trockenem Zustand eine durch einen Farbwinkel zwischen 60 und 300° definierte Farbe aufweist.

10. Dach oder Außenwand eines Gebäudes, das bzw. die mit der Farbmittelzusammensetzung nach einem der vorhergehenden Ansprüche beschichtet ist.

11. Dach oder Außenwand eines Gebäudes nach Anspruch 10, das bzw. die mit einer ausreichenden Menge der infrarotreflektierenden Farbmittelzusammensetzung zur Bereitstellung einer trockenen Farbmittelschicht mit einer Dicke von mindestens 50 µm beschichtet ist.

12. Verfahren zur Verringerung des Temperaturanstiegs eines Daches oder einer Außenwand eines Infrarotstrahlung der Sonne ausgesetzten Gebäudes, bei dem man die äußere Oberfläche der Wand oder des Dachs mit einer infrarotreflektierenden Farbmittelzusammensetzung nach einem der Ansprüche 1 bis 9 beschichtet.

13. Verfahren nach Anspruch 12, bei dem man das Dach oder die Außenwand mit einer ausreichenden Menge der infrarotreflektierenden Farbmittelzusammensetzung nach einem der Ansprüche 1 bis 7 zur Bereitstellung einer trockenen Farbmittelschicht mit einer Dicke von mindestens 50 µm beschichtet.

## Revendications

1. Composition de peinture architecturale réfléchissant l'infrarouge comprenant
i. un pigment d'oxyde de fer rouge
ii. un pigment bleu de phtalocyanine
iii. du dioxyde de titane et éventuellement de l'oxyde de fer jaune la composition étant exempte de pigments noirs absorbant l'infrarouge, de pigments noirs transparents à l'infrarouge et de pigments noirs réfléchissant l'infrarouge, possédant une valeur de clarté, L*, lorsque sèche, de 38 à 88 et le rapport pondéral de i:ii étant de 3:1 à 15:1.

2. Composition de peinture selon la revendication 1, la valeur de clarté, L*, de la composition, lorsque sèche, étant de 65 à 88.

3. Composition de peinture selon la revendication 1 ou la revendication 2, le dioxyde de titane étant la forme rutile.

4. Composition de peinture selon l'une quelconque des revendications précédentes, le pigment de dioxyde de titane représentant au moins 4 % en poids sur la base de la peinture totale sèche.

5. Composition de peinture selon l'une quelconque des revendications précédentes, le dioxyde de titane possédant une grosseur moyenne de particule d'au moins 100 nm.

6. Composition de peinture selon l'une quelconque des revendications précédentes, le pigment bleu de phtalocyanine étant choisi dans le groupe constitué par le pigment bleu Cl 15, 15:1, 15:2, 15:3, 15:4, 15:5, 15:6 et 16.

7. Composition de peinture selon l'une quelconque des revendications précédentes, l'oxyde de fer rouge représentant de 0,100 à 5,000 % en poids et le bleu de phtalocyanine représentant 0,015 à 0,900 % en poids de la composition, lorsque sèche.

8. Composition de peinture selon l'une quelconque des revendications précédentes, un revêtement sec de la composition de 50 µm étant opaque, le rapport de contraste étant d'au moins 95, exprimé comme un pourcentage de réflectance de lumière mesurée sur une partie noire d'un tableau comparée à une partie blanche, lorsqu'un revêtement est appliqué sur une carte d'opacité noire et blanche et laissé à sécher.

9. Composition de peinture selon l'une quelconque des revendications précédentes, la composition, lorsque sèche, possédant une couleur définie par un angle de teinte compris entre 60 et 300 °.

10. Toit ou mur extérieur d'un bâtiment revêtu par la composition de peinture selon l'une quelconque des revendications précédentes.

11. Toit ou mur extérieur d'un bâtiment selon la revendication 10 revêtu par une quantité suffisante de la composition de peinture réfléchissant l'infrarouge pour fournir un revêtement de peinture sec d'au moins 50 µm.

12. Procédé de réduction de l'augmentation de température d'un toit ou d'un mur extérieur d'un bâtiment exposé à un rayonnement infrarouge solaire comprenant le revêtement de la surface extérieure du mur ou du toit par une composition de peinture réfléchissant l'infrarouge selon l'une quelconque des revendications 1 à 9.

13. Procédé selon la revendication 12, le toit ou le mur extérieur étant revêtu par une quantité suffisante de la composition de peinture réfléchissant l'infrarouge selon l'une quelconque des revendications 1 à 7 pour fournir un revêtement de peinture sec d'au moins 50 µm.
